# EUROPÄISCHE PATENTANMELDUNG

(11) **EP 2 178 183 A2**
(43) Veröffentlichungstag der Anmeldung: **21.04.2010**
(21) Anmeldenummer: 09012083.3
(22) Anmeldetag: 23.09.2009
(51) Int. Cl.: H02G 15/007, H02G 3/22

(54) **Kabeldurchführung für Gehäuse elektronischer Komponenten**

(30) Priorität: 26.09.2008 DE 102008049258
(71) Anmelder: Baumer Innotec AG, 8500 Frauenfeld (CH)
(72) Erfinder: Thio, Christian, 6652 Tegna (CH); Hediger, Michael, 8472 Oberohrinen (CH)
(74) Vertreter: Schmidt, Oliver

(57) **Zusammenfassung**

Die Erfindung betrifft eine schneller und einfacher montierbare Kabeldurchführung. eines Gehäuses einer elektrischen oder elektro-optischen Vorrichtung. Die Kabeldurchführung umfasst
- eine im Gehäuse angeordnete Öffnung, durch welches ein Kabel hindurchgeführt ist, wobei die Öffnung von einer umlaufenden Sitzfläche am Gehäuse umgeben ist, die ihrerseits von einem
- Lamellenkranz umgeben ist, wobei um den Lamellenkranz herum
- ein Zwischenraum verläuft, der
- außen von einer Wandung begrenzt ist,
wobei
- eine Einpresshülse in den Zwischenraum eingeführt und mit einer Mantelfläche mit der Wandung verpresst ist,
wobei die Einpresshülse einen
- inneren Wandabschnitt aufweist, dessen Innendurchmesser sich verjüngt, mit welchem durch die Einführung in den Zwischenraum in axialer Richtung die Lamellen des Lamellenkranzes in radialer Richtung nach innen gebogen sind. Eine Elastomertülle ist auf das Kabel gesteckt, welche an der Sitzfläche anfliegt, vom Lamellenkranz umgeben und durch die radial einwärts gebogenen Lamellen in radialer Richtung komprimiert ist und das Kabel fixiert.

## Beschreibung

Die Erfindung betrifft allgemein Gehäuse elektrischer Vorrichtungen. Insbesondere betrifft die Erfindung eine Vorrichtung zum Durchführen und Haltern eines Kabels an der Gehäusewandung.

Kabeldurchführungen dienen generell dazu, die Kabel am Gehäuse einer elektrischen Vorrichtung, wie etwa dem Gehäuse eines Sensors festzulegen und gegebenenfalls auch eine Zugentlastung bereitzustellen. Typischerweise sind diese Durchführungen zur Festlegung des Kabels verschraubt. Eine derartige Kabeldurchführung mit einer Dichtung ist beispielsweise aus der WO 2006/074770 AI bekannt. In einem Bauteil ist eine Gewindeöffnung vorgesehen, in der eine durchmesserreduzierte Druckfläche vorhanden ist. Die Kabeldurchführung umfasst weiterhin einen in die Gewindeöffnung einsetzbaren und verformbaren Dichtring und eine in die Gewindeöffnung einschraubbare Hohlschraube. Die Hohlschraube wird in die Gewindeöffnung eingeschraubt, wodurch der Dichtring verformt wird, so dass er die Kabeldurchführung abdichtet. Mit der Verformung geht allerdings einher, dass sich zumindest eine Fläche der Gewindeöffnung oder der Hohlschraube auf dem Dichtring dreht und in Umfangsrichtung wirkende Kräfte auf den Dichtring ausgeübt werden. Dies kann zu einer Torsion des Rings führen, welche die Verformung beeinträchtigt. Außerdem erfordert eine Schraubverbindung eine genaue Ausformung der Gewindegänge. Auch ist das Verschrauben relativ zeitaufwändig.

Der Erfindung liegt daher die Aufgabe zugrunde, eine schneller und einfacher montierbare Kabeldurchführung bereitzustellen. Diese Aufgabe wird durch den Gegenstand der unabhängigen Ansprüche gelöst. Vorteilhafte Ausgestaltungen und Weiterbildungen der Erfindung sind in den abhängigen Ansprüchen angegeben.

Demgemäß sieht die Erfindung eine Kabeldurchführung eines Gehäuses einer elektrischen oder elektro-optischen Vorrichtung vor, welche
- eine im Gehäuse angeordnete Öffnung umfasst, durch welches ein Kabel, typischerweise mit Mantel hindurchgeführt ist, wobei die Öffnung von einer umlaufenden Sitzfläche am Gehäuse umgeben ist, die ihrerseits von einem
- in radialer Richtung weiter auswärts verlaufenden, Lamellenkranz umgeben ist, dessen Lamellen sich in axialer Richtung auswärts erstrecken, wobei um den Lamellenkranz herum
- ein ringförmiger Zwischenraum verläuft, der
- in radialer Richtung außen von einer den Lamellenkranz umgebenden und radial beabstandeten Wandung begrenzt ist,
wobei
- eine Einpresshülse in den ringförmigen Zwischenraum in axialer Richtung eingeführt und mit einer Mantelfläche mit der den ringförmigen Zwischenraum außen begrenzenden Wandung verpresst ist,
wobei die Einpresshülse einen
- inneren Wandabschnitt aufweist, dessen Innendurchmesser sich in Richtung axial vom Gehäuse weg verjüngt, mit welchem durch die Einführung in den ringförmigen Zwischenraum in axialer Richtung die Lamellen des Lamellenkranzes die Lamellen des Lamellenkranzes in radialer Richtung nach innen gebogen sind, und wobei
- eine Elastomertülle auf das Kabel gesteckt ist, welche an der die Öffnung umgebenden Sitzfläche anfliegt, vom Lamellenkranz umgeben und durch die radial einwärts gebogenen Lamellen in radialer Richtung komprimiert ist und damit das Kabel fixiert. Ein Wandabschnitt, dessen Öffnung sich in axialer Richtung verjüngt, kann insbesondere ein konisch geformter Wandabschnitt sein. Aber auch andere Formen sich in axialer Richtung verjüngender Wandungen sind denkbar. Beispielsweise kann eine solche Verjüngung auch kreis-, parabel-, oder hyperbelförmig sein. Generell sollte die Verjüngung aber zumindest in dem Bereich, in welchem die Lamellen beim Einpressen den Wandabschnitt berühren, eine kontinuierliche, beziehungsweise stufenfreie Verjüngung aufweisen.
   Die Begriffe "axial" und "radial" beziehen sich im Sinne der Erfindung auf die Längsachse der Kabeldurchführung, welche unter anderem durch die Längsachse des hindurchgeführten Kabels definiert wird.
   Die Erfindung sieht auch einen entsprechenden Satz von Teilen für eine derartige Kabeldurchführung eines Gehäuses einer elektrischen oder elektro-optischen Vorrichtung vor. Dieser Teilesatz umfasst dementsprechend ein Gehäuseteil oder an einem Gehäuse befestigbares Teil mit einer Öffnung, durch welches ein Kabel mit Mantel hindurchführbar ist,
- wobei die Öffnung von einer umlaufenden Sitzfläche umgeben ist, die ihrerseits von einem
- in radialer Richtung weiter auswärts verlaufenden, Lamellenkranz umgeben ist, dessen Lamellen sich in axialer Richtung auswärts erstrecken, wobei
- um den Lamellenkranz herum ein ringförmiger Zwischenraum verläuft, der in radialer Richtung aussen von
- einer den Lamellenkranz umgebenden und radial beabstandeten Wandung begrenzt ist,
wobei der Teilesatz außerdem
- eine Einpresshülse, welche in den ringförmigen Zwischenraum in axialer Richtung einführbar und mit einer Mantelfläche mit der den Zwischenraum außen begrenzenden Wandung verpressbar ist, wobei die Einpresshülse einen
- inneren, vorzugsweise konischen Wandabschnitt aufweist, dessen Innendurchmesser sich in axialer Richtung entgegengesetzt zur Einführrichtung verjüngt, sowie
- eine Elastomertülle umfasst, welche auf ein Kabel steckbar und in den Lamellenkranz einführbar ist, so dass sie auf der Sitzfläche aufliegt und durch radial einwärts gebogene Lamellen des Lamellenkranzes in radialer Richtung komprimierbar ist, um durch die Kompression ein Kabel zu fixieren.
   Das Verfahren zur Herstellung oder Montage einer wie oben beschriebenen Kabeldurchführung eines Gehäuses einer elektrischen oder elektro-optischen Vorrichtung, basiert entsprechend darauf, dass durch die Öffnung im Gehäuse ein Kabel mit Mantel hindurchgeführt wird, wobei die Öffnung von einer umlaufenden Sitzfläche am Gehäuse umgeben ist, die ihrerseits von einem
- in radialer Richtung weiter auswärts verlaufenden, Lamellenkranz umgeben ist, dessen Lamellen sich in axialer Richtung auswärts erstrecken, wobei um den Lamellenkranz herum
- ein ringförmiger Zwischenraum verläuft, der
- in radialer Richtung außen von einer den Lamellenkranz umgebenden und radial beabstandeten Wandung begrenzt ist,
wobei
- eine Einpresshülse in den ringförmigen Zwischenraum in axialer Richtung eingeführt und mit einer Mantelfläche mit der den ringförmigen Zwischenraum außen begrenzenden Wandung verpresst wird,
wobei die Einpresshülse einen
- inneren, vorzugsweise konischen Wandabschnitt aufweist, dessen Innendurchmesser sich in Richtung axial vom Gehäuse weg verjüngt, mit welchem durch die Einführung in den Zwischenraum in axialer Richtung die Lamellen des Lamellenkranzes die Lamellen des Lamellenkranzes in radialer Richtung nach innen gebogen werden, und wobei vor dem Einführen der Einpresshülse
- eine Elastomertülle auf das Kabel, beziehungsweise dessen Mantel gesteckt wird, so dass diese vom Lamellenkranz umgeben ist, und durch das Einführen der Einpresshülse an der die Öffnung umgebenden Sitzfläche angelegt und durch die radial einwärts gebogenen Lamellen in radialer Richtung komprimiert wird und damit das Kabel fixiert.

Das Einpressen wird dabei vorzugsweise nicht mit vorgegebenem Einpressweg, sondern anstelle dessen mit vorgegebenem Einpressdruck, beziehungsweise kraftgesteuert vorgenommen. Dies hat sich als sehr günstig hinsichtlich der Haltbarkeit der Verpressung erwiesen.

Durch das Verpressen der Einpresshülse wird eine sehr schnelle Montage ermöglicht. Es ist auch überraschend, dass eine Verpressung eine dauerhaft haltende Verbindung schafft, zumal über das Kabel auch wechselnde Kräfte auf die Kabeldurchführung ausgeübt werden. Auch ist dabei zu bedenken, dass die verformte Elastomertülle Kräfte auf die Verpressung entgegen der Einpressrichtung ausübt. Es ist aber zu vermuten, dass überraschend gerade diese durch das verformte Elastomer ausgeübte Vorspannung dazu beiträgt, dass die Verbindung eine den Ansprüchen genügende Haltbarkeit aufweist und das Kabel so fest umschließt, dass auch eine gute Zugentlastung erreicht wird. So konnte verifiziert werden, dass eine erfindungsgemäße Kabeldurchführung bei einer Kabel-Auszugskraft von 80 N und einem Kabeldurchmesser von 4 Millimetern das Kabel fest hält und auch die Pressverbindung sich nicht löst. Damit ist auch den Anforderungen gemäß der Norm IEC60947-5-2, Anhang C genügt.

Die Elastomertülle wird besonders bevorzugt auch in axialer Richtung komprimiert und sitzt dann dichtend auf der Sitzfläche auf. Damit wird zusätzlich auch eine abdichtende Durchführung erreicht, denn die radiale Kompression über die Lamellen schafft eine Abdichtung zum Kabel hin und der durch die axiale Kompression bewirkte Anpressdruck auf die Sitzfläche dichtet zum Gehäuse hin ab. Mit der Kabeldurchführung können so auch die Spezifikationen gemäß IP 67 erfüllt werden. Nach der Norm IP 67 muss die Verbindung dicht bleiben, wenn das Gehäuse 30 Minuten lang in einem Meter Tauchtiefe in Wasser getaucht wird.

Um eine Kompression der Elastomertülle in axialer Richtung zu unterstützen kann gegebenenfalls die in den Lamellenkranz eingesetzte und an der Sitzfläche anliegende Elastomertülle in axialer Richtung über den Lamellenkranz hinausragen. Dann kann die Einpresshülse beim Einsetzen direkt auf das vom Gehäuse abgewandte, aus dem Lamellenkranz herausragende Ende der Elastomertülle gedrückt werden und einen Druck in axialer Richtung auf die Sitzfläche zu bewirken. Im allgemeinen wird aber eine ausreichende Andruckkraft auch dann erzielt, wenn die Elastomertülle mit dem Ende des Lamellenkranzes abschließt oder letzterer sogar über die Elastomertülle hinausragt.

Der Lamellenkranz kann als separates Teil ausgeführt sein. In bevorzugter Ausgestaltung ist jedoch der Lamellenkranz aus dem Gehäuse ausgeformt. Dies ermöglicht eine sehr kompakte Bauweise und sorgt außerdem für eine Zentrierung des Lamellenkranzes in Bezug auf die Öffnung für das Kabel.

Generell ist die Kabeldurchführung sehr gut geeignet, um Toleranzen in Form und Durchmesser der festzulegenden Kabel auszugleichen. Diese Eigenschaften, insbesondere auch im Hinblick auf die Verpressung werden durch besondere Merkmale der Elastomertülle unterstützt. So ist es günstig, wenn die Shore-A Härte der Elastomertülle zumindest 60, vorzugsweise zumindest 75 beträgt, um eine genügende Festigkeit bereitzustellen. Weiter ist eine Share-A Harte kleiner 90 vorteilhaft, um eine gute Verformbarkeit zu erzielen.

Eine hohe Abdichtwirkung bei gleichzeitig erleichterter Verformbarkeit kann insbesondere auch erzielt werden, wenn die Elastomertülle mehrere in axialer Richtung beabstandete, in Umfangsrichtung verlaufende, dementsprechend ringförmige Verdickungen oder Rippen aufweist. Besonders bevorzugt sind die Verdickungen oder Rippen an der Innenwandung der Tülle angeordnet. Durch diese Rippenstruktur wird eine Verformung des Elastomers in axialer Richtung zwischen den Rippen ermöglicht. Dadurch wird, da dem Material weitere Möglichkeiten zur Verformung gegeben werden, auch eine leichtere Kompression in radialer Richtung ermöglicht. Zudem wirken die Rippen oder Verdickungen, wenn diese innenliegend angeordnet sind, wie mehrere hintereinandergeschaltete Dichtungen am Kabel, beziehungsweise Kabelmantel und tragen damit zu einer Verbesserung der Abdichtung bei. Insbesondere wird aber durch innenliegende Verdickungen eine erhöhte Toleranz hinsichtlich des Kabeldurchmessers erreicht, da die Tülle sich innenseitig leichter an das Kabel anpassen kann.

In Bezug auf die Form der Elastomertülle ist es weiterhin von Vorteil, wenn die Elastomertülle eine Länge aufweist, die größer als deren Innendurchmesser ist. In Bezug auf den Aussendurchmesser ist es günstig, wenn die Elastomertülle eine Länge aufweist, die mindestens zwei Drittel der Länge des Aussendurchmessers der Elastomertülle beträgt, vorzugsweise aber höchstens eine Länge vom Eineinhalbfachen des Aussendurchmessers der Elastomertülle aufweist. Beides zusammen erleichtert die Längskompression der Elastomertülle beim Verpressen der Einpresshülse.

Im Falle einer sich konisch verjüngenden Innenfläche beträgt der Winkel der konischen Innenfläche zur Mittenachse der Einpresshülse vorteilhaft zumindest 10°, vorzugsweise zumindest 15°, besonders bevorzugt im Bereich von 15 bis 35°. Winkel größer als 10° ermöglichen es, die Einpresshülse kurz zu halten. Dies reduziert auch den Hebelarm, mit welchem Drehmomente quer zur Längsrichtung der Kabeldurchführung erzeugt werden können und welche die Einpressung lockern könnten. Zu steile Winkel größer als 35° sind andererseits nachteilig, da der Einpressweg verkürzt wird und beim Einpressen Kräfte in axialer Richtung erzeugt werden, welche eine Durchbiegung der Lamellen anstelle der gewünschten Verbiegung radial zur Mitte hin bewirken können.

Um die Verpressung zu verbessern, kann weiterhin vorteilhaft die Einpresshülse auf ihrer mit der den ringförmigen Zwischenraum außen begrenzenden Wandung korrespondierenden Mantelfläche mit zumindest einer umlaufenden Rille versehen werden.

Weiterhin kann die Mantelfläche der Einpresshülse zusätzlich gegebenenfalls mit der den ringförmigen Zwischenraum außen begrenzenden Wandung verklebt werden, um die Haltbarkeit der Verbindung zu erhöhen.

Alternativ oder zusätzlich kann die Einpressung auch eine Verrastung umfassen. Dazu können geeignete verrastende Strukturen auf der Mantelfläche der Einpresshülse und der den Zwischenraum begrenzenden Wandung am Gehäuse vorgesehen werden. So können an der Wandung eine oder mehrere ringförmige Leisten vorgesehen sein, welche mit einer oder mehreren Rillen in der Mantelfläche der Einpresshülse verrasten.

Die Mantelfläche auf der Einpresshülse verläuft im Schnitt gesehen vorzugsweise parallel zur Mittenachse, entspricht in ihrer Form also der Mantelfläche eines Zylinders. Ebenso ist vorzugsweise die korrespondierende, den Zwischenraum begrenzende Wandung am Gehäuse ausgestaltet, hat also die Form der Innenfläche eines Hohlzylinders, beziehungsweise läuft im Schnitt entlang der Längsachse der Kabeldurchführung gesehen parallel zur Längsachse. Möglich sind geringe Abweichungen von einem parallelen Verlauf der Flächen zur Längsachse. So können die Flächen auch jeweils leicht konisch geformt sein, wobei der Öffnungswinkel des Konus aber vorzugsweise 5° nicht übersteigt.

Die Kabeldurchführung ermöglicht unter anderem eine schnelle Vor-Ort-Montage. Dieser Vorteil gegenüber bekannten Verschraubungen fällt jedoch etwas weniger ins Gewicht, wenn das Anbringen der Kabeldurchführung keinen wesentlichen Anteil an der gesamten Montagezeit hat. Wesentlich für die gesamte Montagezeit ist dabei auch das Anbringen der elektrischen Vorrichtung. Als Beispiel sei hier die Montage eines Sensors, etwa für eine Lichtschranke gedacht. Je nach Anwendungsfall kann es hier vorkommen, dass eine große Anzahl von Sensoren montiert werden muss, etwa in einer industriellen Fertigungshalle. Der Aufwand erhöht sich noch beim Wechseln eines defekten Geräts, denn hier muss zusätzlich der defekte Sensor entfernt, typischerweise abgeschraubt werden. Die Erfindung betrifft in einem weiteren Aspekt daher auch eine Montagevorrichtung für Sensoren, welche ein sehr schnelles Befestigen und ein einfaches Lösen des Sensors ermöglicht, ein unbeabsichtigtes Lösen aber dennoch wirkungsvoll verhindert.

Dazu ist unabhängig von den vorstehend beschriebenen Merkmalen der Kabeldurchführung eine Montagevorrichtung für elektrische Gehäuse, insbesondere Sensorgehäuse in Form eines kastenförmigen Gehäuses vorgesehen, welches eine Öffnung auf einer Vorderseite aufweist, in welche das Gehäuse eines Sensors einsetzbar ist, wobei der Rand der Vorderseite des Gehäuses von einem umlaufenden Blendrahmen umgeben ist, und wobei das Gehäuse innenseitige Rastmittel aufweist, mit welchen das Sensorgehäuse einrastbar ist, und
wobei an zumindest zwei gegenüberliegenden Seiten des Gehäuses senkrecht zu den Seiten federnd bewegliche Blattfedern angeordnet sind, wobei die Blattfedern auf ihrer vom Gehäuse abgewandten Seite eine Vielzahl von parallel zur Fläche des Blendrahmens verlaufenden Rastleisten aufweisen, welche in Richtung von der Vorderseite zur Rückseite hin hintereinander angeordnet sind, und wobei der Blendrahmen vorteilhaft entfernbare oder wegbiegbare, vorzugsweise ausbrechbare Bereiche aufweist, welche sich an den Seiten des Gehäuses mit den Blattfedern befinden. Mit anderen Worten sind die ausbrechbaren Bereiche so angeordnet, dass sie in Richtung auf die Vorderseite des Gehäuses gesehen vor den Blattfedern angeordnet sind und diese verdecken. Vorzugsweise sind die Blattfedern einseitig am hinteren, also dem vom Blendrahmen abgewandten Rand des Gehäuses befestigt. Dies ist günstig, um eine im montierten Zustand auf das Gehäuse der Montagevorrichtung wirkende Zugkraft abzufangen. Vorzugsweise sind Bereiche am Rand des Blendrahmens ausbrechbar ausgebildet, da dies ein einfaches Ansetzen eines Ausbrechwerkzeugs gestattet und zudem Länge der Sollbruchstellen reduziert werden, was ebenfalls das Ausbrechen erleichtert.

Die mehreren hintereinander angeordneten Rastleisten auf den Blattfedern ermöglichen dabei eine Verrastung in Blechen verschiedener Dicken.

Der hintere Rand des Gehäuses der Montagevorrichtung ist vorzugsweise zumindest teilweise offen, um den Abgang eines rückseitigen Kabels des elektrischen Gehäuses möglichst nicht zu behindern. Insbesondere kann die Öffnung auch dergestalt sein, dass das zu fixierende elektrische Gehäuse auch vom hinteren Rand her eingeschoben werden kann.

Diese Montagevorrichtung erlaubt es, das Gehäuse eines Sensors in der Öffnung eines Blechs zu montieren, ohne dass das Blech von der Hinterseite zugänglich zu sein braucht. Dazu wird die Montagevorrichtung mit der in die Öffnung eingesetzt, wobei der Blendrahmen als Anschlag dient. Die Rastleisten der Blattfedern verrasten dann mit dem Rand der Öffnung im Blech. Anschließend kann nun ebenfalls von vorne das zu montierende elektrische Gehäuse eingesetzt werden. Dieses verrastet mit den innenseitigen Raststrukturen des Gehäuses der Montagevorrichtung.

Es ist umgekehrt auch ebenso möglich, erst das elektrische Gehäuse in die Montagevorrichtung einzusetzen und dann die Montagevorrichtung mit dem montierten Gehäuse im Blech zu fixieren. Ist das Gehäuse der Montagevorrichtung auf der Rückseite offen, kann das elektrische Gehäuse auch von der Rückseite der Montagevorrichtung eingeschoben werden. IN diesem Fall ist es günstig, zuerst das elektrische Gehäuse in der Montagevorrichtung und dann die Montagevorrichtung in die vorgesehene Öffnung des Blechs einzusetzen, um alle Schritte der Fixierung der elektrischen Vorrichtung im Blech von dessen Vorderseite her ausführen zu können.

In besonders bevorzugter Ausgestaltung der Erfindung sind die Raststrukturen der Montagevorrichtung zur Verrastung des elektrischen Gehäuses derart ausgebildet, dass diese zum Entrasten vom Gehäuse der Montagevorrichtung auswärts zu bewegen sind. Eine Möglichkeit dazu, wie sie auch in bevorzugter Ausgestaltung vorgesehen ist, sind eine oder mehrere Blattfedern mit jeweils zumindest einer in das Gehäuse der Montagevorrichtung hineinragenden Raststruktur. Die Raststruktur kann eine Rastleiste oder Rastnase sein. Um die Verrastung zu lösen wird die Blattfeder nach außen und damit die Raststruktur vom Gehäuse der elektrischen Vorrichtung weg bewegt. Enden die Blattfedern hinreichend weit vorne, also in der Nähe des Blendrahmens, so wird eine Auswärtsbewegung der Blattfedern im montierten Zustand im Blech durch den Rand der Öffnung im Blech verhindert, da die Blattfeder vor dem Lösen der Verrastung gegen den Rand der Öffnung des Bleches stößt. Damit wird, sobald die Montagevorrichtung mit dem darin eingesetzten elektrischen Gehäuse im Blech montiert ist, das elektrische Gehäuse unlösbar darin fixiert und kann erst durch Entfernen der Montagevorrichtung wieder herausgenommen werden. Da die Blattfedern gemäß dieser Ausgestaltung der Erfindung durch die Öffnung des Bleches gehemmt werden, wird bei dieser Ausführungsform zur Montage hier auch das Einrasten des elektrischen Gehäuses vor dem Einsetzen der Montagevorrichtung in das Blech durchgeführt.

Muss die elektrische Vorrichtung, wie etwa ein optischer Sensor herausgenommen werden, können die entfernbaren Bereiche des Blendrahmens herausgebrochen werden. Durch die entstandene Öffnung kann dann ein Werkzeug, wie beispielsweise ein Schraubendreher eingeführt und die Blattfeder in Richtung auf das Gehäuse der Montagevorrichtung gedrückt werden, so dass sich die Verrastung mit dem Blech löst. Notfalls kann die Montagevorrichtung anschließend auch wiederverwendet werden, wobei nun durch den entfernten Bereich eine Öffnung im Blendrahmen verbleibt.

Die Erfindung wird nachfolgend anhand von Ausführungsbeispielen und unter Bezugnahme auf die beigeschlossenen Zeichnungen näher erläutert. Dabei verweisen gleiche Bezugszeichen auf gleiche oder entsprechende Elemente. Es zeigen:
- Fig. 1: einen Schnitt durch die Gehäuseelemente der Kabeldurchführung,
- Fig. 2: eine Aufsicht auf die Gehäuseelemente,
- Fig. 3: eine Schnittansicht der Elastomertülle,
- Fig. 4: eine Schnittansicht der Einpresshülse,
- Fig. 5: eine Schnittansicht einer Kabeldurchführung mit den in Fig. 1 bis 4 dargestellten Teilen,
- Fig. 6: eine perspektivische Ansicht einer Montagevorrichtung für ein elektrisches Gehäuse,
- Fig. 7 bis 9: Schritte zur Montage und Demontage eines Sensors mit Hilfe der in Fig. 6 gezeigten Montagevorrichtung.

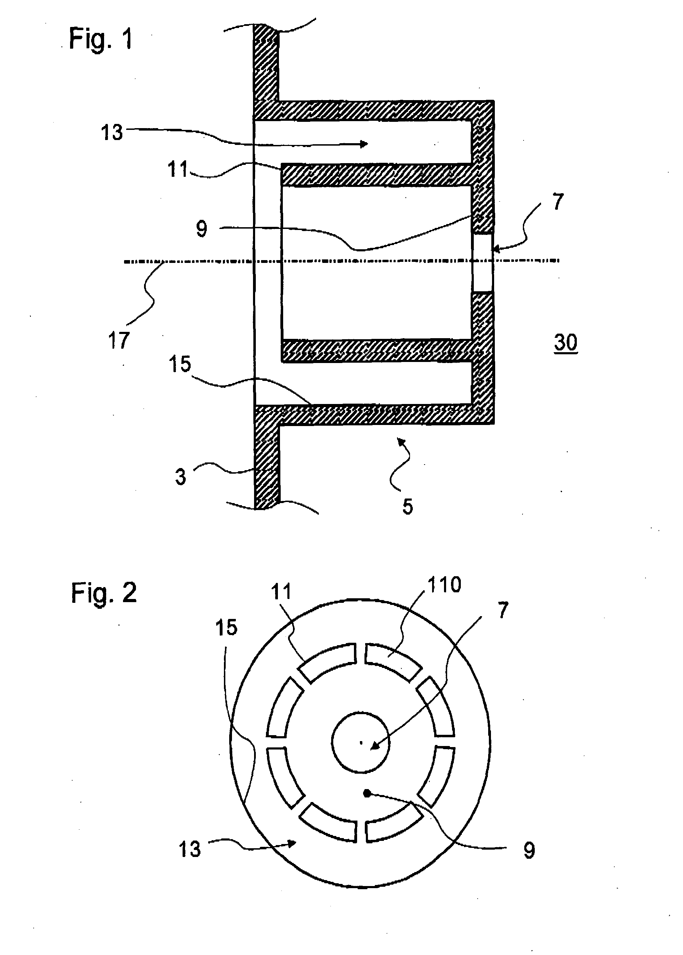

Anhand der Fig. 1 und 2 werden nachfolgend die gehäuseseitigen Elemente der Kabeldurchführung beschrieben. Fig. 1 zeigt einen Schnitt und Fig. 2 eine Aufsicht von außen auf das Gehäuse.

In einem elektrischen Gehäuse 3, beispielsweise einem Sensorgehäuse ist eine in das Gehäuseinnere 30 hineinragende Ausformung 5 mit zylindrischer Wandung ausgebildet. Mittig im Boden der Ausformung ist eine Öffnung 7 eingefügt, durch welche das festzulegende Kabel in das Gehäuse geführt wird. Die Öffnung 7 wird ringförmig von einem sich in radialer Richtung an die Öffnung 7 anschließenden Bereich des Bodens der Ausformung 5 umgeben. Dieser Bereich bildet eine Sitz- oder Dichtfläche 9.

Die Sitzfläche 9 ist von einem in radialer Richtung weiter auswärts verlaufenden Lamellenkranz 11 umgeben, dessen Lamellen 110 sich in axialer Richtung, also entlang der Mittenachse 17 auswärts erstrecken. Der Lamellenkranz 11 ist ebenfalls wie die Ausformung 5 aus dem Gehäuse ausgeformt, beziehungsweise einstückig mit dem Gehäuse ausgebildet.

Um den Lamellenkranz 11 herum verläuft ein ringförmiger Zwischenraum 13, der in radialer Richtung außen von einer den Lamellenkranz umgebenden Wandung 15 begrenzt wird. Dabei wird der ringförmige Zwischenraum 13 durch die radiale Beabstandung der Wandung 15 und dem weiter innen liegenden Lamellenkranz 11 definiert. Die Wandung 15 hat die Form der Innenfläche eines Hohlzylinders, wobei demgemäß die Wandung in axialer Richtung parallel zur Mittenachse 17 verläuft.

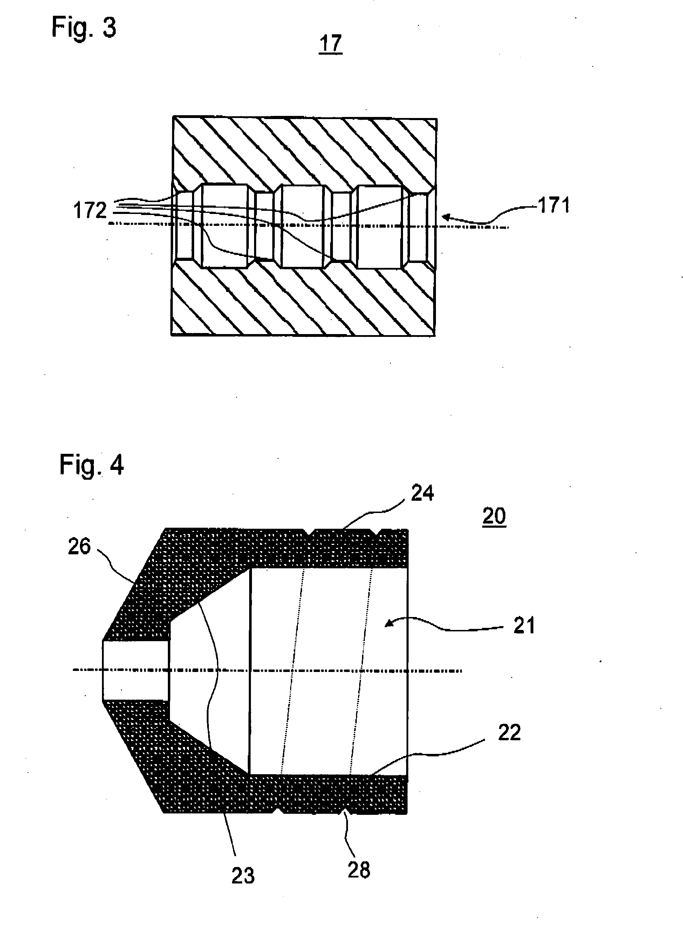

Fig. 3 zeigt eine Schnittansicht durch die Elastomertülle 17, wobei der Schnitt in axialer Richtung entlang der Mittenachse der Elastomertülle 19 verläuft. Die Elastomertülle weist eine allgemein röhrenförmige Gestalt mit einer axialen Durchgangsöffnung 171 auf, durch welche das festzulegende Kabel gesteckt wird. Innenseitig in der Durchgangsöffnung 171 sind mehrere in axialer Richtung beabstandete, in Umfangsrichtung verlaufende, ringförmige Verdickungen oder Rippen 172 vorgesehen, mit denen unter anderem eine bessere Toleranz hinsichtlich des Durchmessers des Kabels erzielt wird.

Fig. 4 zeigt ein Schnittansicht der Einpresshülse 20. Die Einpresshülse 20 weist eine Öffnung 21 in axialer Richtung auf. Die Innenwandung 22 der Öffnung 21 weist einen konisch zulaufenden Wandabschnitt 23 auf, dessen Innendurchmesser sich demgemäß in axialer Richtung entlang der gestrichelt eingezeichneten Mittenachse verjüngt. Der Winkel der Fläche zur Mittenachse beträgt vorzugsweise zumindest 10°, besonders bevorzugt zwischen 15 und 35°.

Eine äußere, zylindrische Mantelfläche 24 bildet die Einpressfläche zum Befestigen der Einpresshülse 20 in der in Fig. 1 gezeigten Ausformung 5 des Gehäuses 3. Um die Haftung in der Ausformung 5 zu verbessern, können Rillen auf der Mantelfläche 24 vorgesehen werden. Bei dem in Fig. 4 gezeigten Beispiel ist eine einfache, spiralförmig umlaufende Rille 28 eingefügt, welche die gleiche Funktion wie mehrere hintereinander angeordnete Rillen erfüllt, allerdings bei einer bevorzugten Ausführung der Einpresshülse als Automatendrehteil etwas leichter zu fertigen. Anstelle eines Metall-Automatendrehteils kommt generell, ohne Beschränkung auf das beschriebene Ausführungsbeispiel auch ein Metall-Tiefziehteil, oder sogar ein Kunststoffteil als Einpressteil in Betracht.

An die zylindrische Mantelfläche 24 schließt sich ein Abschnitt 26 der Mantelfläche an, welcher sich zum Ende der Einpresshülse verjüngt. Bei dem gezeigten Beispiel läuft der Abschnitt, ebenso wie der sich verjüngende Abschnitt 23 der Innenfläche konisch zu. Generell sind sich konisch verjüngende Flächen von Vorteil, wenn Automatendrehteile als Einpressteile eingesetzt werden, da konische Flächen auf Drehbänken leicht herstellbar sind.

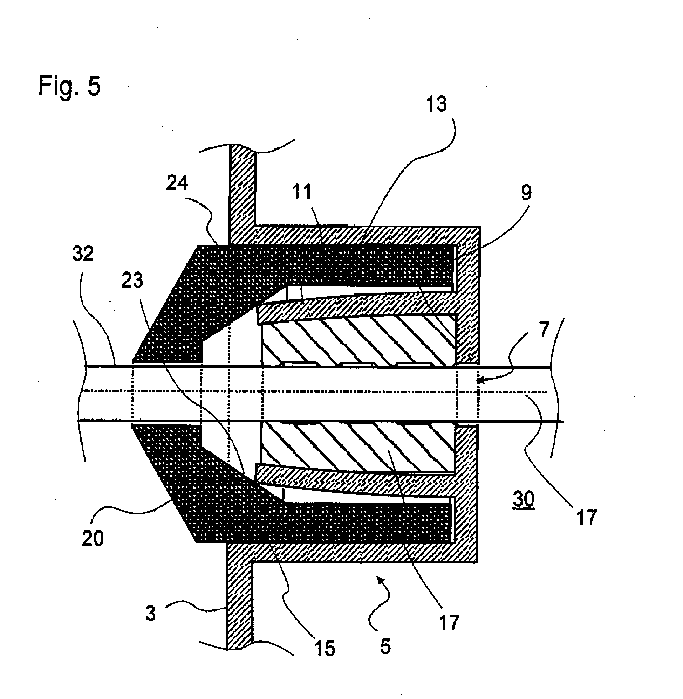

Fig. 5 zeigt eine Kabeldurchführung 1 mit den anhand der Fig. 1 bis 4 beschriebenen Teilen und einem mit der Kabeldurchführung 1 am Gehäuse 3 festgelegten Kabel 32. Auf das Kabel ist die Elastomertülle 17 aufgeschoben und in den Lamellenkranz 11 eingeführt. Die Einpresshülse 20 ist ebenfalls auf das Kabel 32 aufgeschoben und in den ringförmigen Zwischenraum 13 in axialer Richtung am Kabel entlang eingeführt und mit der Mantelfläche 24 mit der den Zwischenraum 13 außen begrenzenden Wandung 15 des Gehäuses verpresst. Dabei wird die Wandung 15 radial leicht aufgeweitet oder unter Zugspannung in Umfangsrichtung gesetzt, was zu einer festen Umklammerung der Einpresshülse 20 führt.

Das Einpressen erfolgt dabei vorzugsweise mit vorgegebener Einpresskraft oder bis ein vorgegebener Einpressdruck erreicht ist. Dementsprechend wird das Einpressen vorzugsweise nicht weg-, sondern kraftgesteuert vorgenommen. Ein Einpressen bis zu einem bestimmten Punkt könnte abhängig von den Toleranzen unter Umständen zu einer zu losen Verpressung führen.

Der sich verjüngende Abschnitt 23 der Einpresshülse 20 kommt beim Einführen und Verpressen in Anlage mit den Enden der Lamellen des Lamellenkranzes 11. Dadurch werden die Lamellen radial einwärts auf das Kabel zu bewegt und komprimieren dabei die dazwischen eingeführte Elastomertülle 17 in radialer Richtung. Durch die radiale Kompression der Elastomertülle 17 wird die Öffnung der Elastomertülle 17 verengt, so dass das Kabel 32 an dessen Mantel festgelegt und gleichzeitig abgedichtet wird.

Da der Druck durch die sich radial einwärts verbiegenden und am Boden der Ausformung 5 mit dem Gehäuse 3 verbundenen Lamellen im wesentlichen am von der Öffnung 7 des Gehäuses entfernten Ende der Elastomertülle 17 erfolgt, wird die Elastomertülle 17 auch axial in Richtung auf die Öffnung 7 und die diese umgebende Sitzfläche 9 gepreßt und in axialer Richtung zumindest leicht komprimiert. Damit wird zusätzlich eine Abdichtung an der Sitzfläche 9 und folglich eine dichte Befestigung des Kabels 32 am Gehäuse erzielt. Da die Elastomertülle 17 auf diese Weise in axialer Richtung festgelegt und das Kabel in der Elastomertülle 17 durch deren radiale Kompression geklemmt wird, wird außerdem eine Zugentlastung bereitgestellt. Typischerweise kann, wie oben bereits erwähnt eine der Norm IP 67 genügende Dichtigkeit der Kabeldurchführung 1 und eine Zugfestigkeit von 90 Newton ohne jegliche Schraubverbindung erzielt werden.

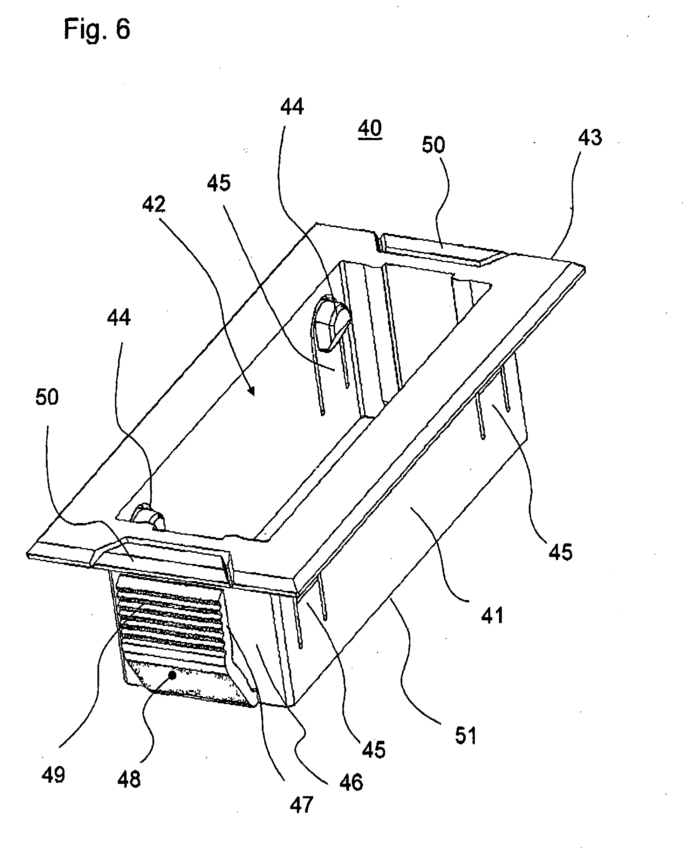

Die wie vorstehend beschriebene Kabeldurchführung erlaubt eine schnelle Montage vor Ort. Um auch das Gehäuse 3 einer elektrische Vorrichtung, wie etwa eines Sensors schnell am Montageort befestigen zu können, sieht die Erfindung unabhängig von der Art und Weise der Ausgestaltung der Kabeldurchführung oder dem Vorhandensein einer Kabeldurchführung auch eine Montagevorrichtung 40 vor, wie sie anhand der nachfolgenden Figuren beschrieben wird. Fig. 6 zeigt eine perspektivische Ansicht der Montagevorrichtung 40. Die Montagevorrichtung 40 umfasst ein kastenförmiges Gehäuse 41, welches eine Öffnung 42 auf einer Vorderseite aufweist, in welche das Gehäuse eines. Sensors einsetzbar ist. Der Rand der Vorderseite des Gehäuses 41, beziehungsweise die Öffnung 42 ist von einem umlaufenden Blendrahmen 43 umgeben.

Im Gehäuse 41 sind innenseitige Rastmittel in Form von in den Innenraum des Gehäuses 41 hineinragenden, an aus dem Gehäuse ausgeformten Blattfedern angeordneten Rastnasen 44 vorgesehen, mit welchen das Sensorgehäuse einrastbar ist. Je nach Ausgestaltung des Sensorgehäuses sind auch andere Rastmittel möglich.

An zumindest zwei gegenüberliegenden Seiten des Gehäuses, bei dem gezeigten Beispiel die Schmalseiten 46 des rechteckigen Gehäuses 41 sind senkrecht zu den Seiten 46 federnd bewegliche Blattfedern 47 angeordnet, wobei die Blattfedern 47 auf ihrer vom Gehäuse 41 abgewandten Seite 48 eine Vielzahl von parallel entlang der Fläche des Blendrahmens 43 verlaufenden Rastleisten 49 aufweisen, welche in Richtung von der Vorderseite des Gehäuses zur Rückseite hin hintereinander angeordnet sind.

Der Blendrahmen 42 weist zusätzlich entfernbare, vorzugsweise ausbrechbare Bereiche 50 auf, welche sich an den Seiten 46 des Gehäuses 41 mit den Blattfedern 47 befinden. Diese können mit den Fingern oder mit einem einfachen Werkzeug, wie etwa einem Schraubendreher entfernt werden, so dass die federnd beweglichen Vorderkanten der Blattfedern 47 von der Vorderseite der Montagevorrichtung hinter dem Blendrahmen sichtbar sind.

Vorzugsweise sind die Blattfedern 47 einseitig am hinteren, also dem vom Blendrahmen 43 abgewandten Rand 51 des Gehäuses 41 befestigt.

Der hintere Rand 51 des Gehäuses 41 der Montagevorrichtung 40 weist ebenfalls wie der vordere Rand des Gehäuses 41 eine Öffnung auf. Bei dem in Fig. 6 gezeigten Beispiel ist die Rückseite des Gehäuses ebenso wie die Vorderseite vollständig offen. Die Begriffe Vorderseite und Rückseite, beziehungsweise "vorne" oder "hinten" beziehen sich im Sinne der Erfindung auf die Einbaulage des Sensors. Im eingebauten Zustand befindet sich der Blendrahmen sichtbar vor einem Blech, in welches die Montagevorrichtung eingesetzt wird und definiert damit die Vorderseite des Gehäuses 41, beziehungsweise der Montagevorrichtung 40.

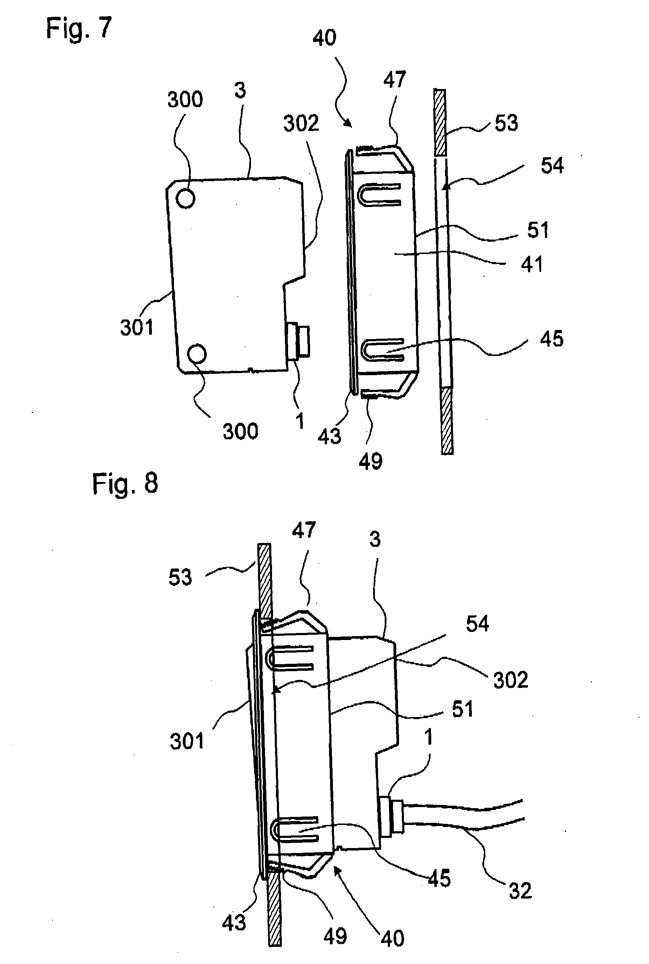

Anhand der Fig. 7 bis 9 wird nachfolgend die Montage eines Sensors in einem Sensorgehäuse 3 mittels der Montagevorrichtung 40 in der Öffnung 54 eines Bleches 53, sowie die Demontage beschrieben. Fig. 7 zeigt dazu das Sensorgehäuse 3, die Montagevorrichtung 40 und das Blech 53 mit der Öffnung 54.

Das Sensorgehäuse 3 weist eine Vorderseite 301 und eine Rückseite 302 auf. An der Rückseite 302 ist eine Kabeldurchführung angebracht, wobei es sich insbesondere auch um eine wie anhand der Fig. 1 bis 5 beschriebene Kabeldurchführung handeln kann. An der Vorderseite kann das Sensorgehäuse beispielsweise ein Fenster für einen dahinter angeordneten optoelektronischen Sensor und/oder eine Lichtquelle aufweisen, um eine Lichtschranke herzustellen. An den Seiten des Sensorgehäuses 3 sind zu den Rastnasen an den Blattfedern 45 der Montagevorrichtung 40 korrespondierende Rastmittel 300 angeordnet. Beispielsweise können dies Löcher oder Einsenkungen im Gehäuse 3 sein, in welche die Rastnasen 44 einrasten.

Anschließend wird das Sensorgehäuse 3 in die Montagevorrichtung 40 eingerastet. Vorzugsweise wird das Sensorgehäuse dazu in die Öffnung am hinteren Rand 51 des Gehäuses 41 der Montagevorrichtung 40 eingeschoben. Das Montagegehäuse 40 wird dann mit dessen hinterem Rand 51 zuerst in die Öffnung 54 des Bleches 53 eingesetzt, bis der Blendrahmen auf dem Blech 54 anliegt. Die Reihenfolge dieser Schritte ist an sich beliebig. Vorzugsweise erfolgt aber die Verrastung des Gehäuses 3 in der Montagevorrichtung 40 vor dem Einsetzen in das Blech. Vor dem Einsetzen des Gehäuses 3 in die Öffnung 54 kann noch das Anschlusskabel in das Gehäuse eingeführt und mit der Kabeldurchführung 1 festgelegt werden.

Nach diesen Schritten wird ein wie in Fig. 8 gezeigter montierter Sensor erhalten, dessen Gehäuse 3 mittels der Montagevorrichtung 40 am Rand der Öffnung 54 des Bleches fixiert ist. Beim Einführen der Montagevorrichtung 40 in die Öffnung 54 des Bleches 53 werden die Blattfedern 47 in Richtung auf das Gehäuse 41 zu bewegt.

Ist die Montagevorrichtung 40 eingeschoben bis der Blendrahmen 43 auf dem Blech 53 aufliegt, verrastet jeweils zumindest eine der Rastleisten 49 der Blattfedern 47 mit dem Rand der Öffnung 53. Damit wird die Montagevorrichtung gegen ein Herausziehen arretiert. Die Arretierung gegen ein weitergehendes Hineindrücken in die Öffnung 53 wird demgegenüber durch den über die Öffnung 53 hinausragenden Blendrahmen 43 gewährleistet.

Die Blattfedern 47 enden unterhalb des Blendrahmens 43, dort wo bereits das Blech 53 verläuft. Ist die Öffnung 53 im Blech hinreichend eng, so wird eine Auswärtsbewegung der Blattfedern 47 durch den Rand der Öffnung 54 blockiert. Im eingesetzten Zustand kann die Verrastung des Sensorgehäuses 3 mit der Montagevorrichtung daher nicht mehr gelöst werden.

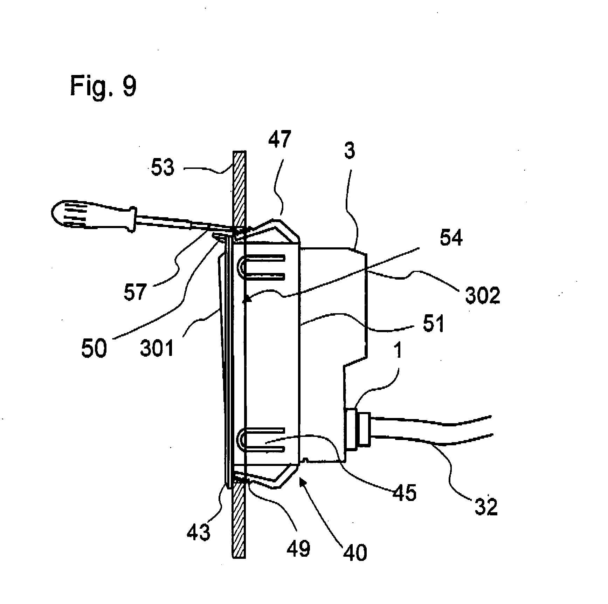

Fig. 9 zeigt schließlich die Demontage des Sensors. Dazu wird der herausbrechbare Bereich 50 am Rand des Blendrahmens 43 ausgebrochen und weggebogen oder entfernt. In Fig. 9 ist der Bereich 50 nach vorne weggebogen dargestellt. Für das Ausbrechen kann beispielsweise unter den Rand des Blendrahmens 43 an der ausbrechbaren Stelle ein Schraubendreher oder ein ähnliches Instrument eingeschoben werden.

Durch die entstandene Lücke kann nun, wie in Fig. 9 dargestellt, ein geeignetes Werkzeug, wie etwa die Spitze 57 eines Schraubendrehers eingeführt und die Blattfeder 47 damit zum Gehäuse 41 hin gedrückt werden, so dass die Verrastung gelöst wird. Die Montagevorrichtung 40 kann nunmitsamt dem darin verrasteten Gehäuse 3 wieder aus der Öffnung 54 des Bleches 53 herausgezogen werden. Wie anhand der Fig. 7 bis 9 gezeigt wurde, können damit alle Montage- und Demontageschritte von der leicht zugänglichen Vorderseite des Bleches 53 vorgenommen werden.

## Patentansprüche

1. Kabeldurchführung eines Gehäuses (3) einer elektrischen oder elektro-optischen Vorrichtung, umfassend
- eine im Gehäuse (3) angeordnete Öffnung (7), durch welches ein Kabel (32) mit Mantel hindurchgeführt ist,
wobei die Öffnung (7) von einer umlaufenden Sitzfläche (9) am Gehäuse (3) umgeben ist, die ihrerseits von einem
- in radialer Richtung weiter auswärts verlaufenden, Lamellenkranz (11) umgeben ist, dessen Lamellen (110) sich in axialer Richtung auswärts erstrecken, wobei um den Lamellenkranz (11) herum
- ein ringförmiger Zwischenraum (13) verläuft, der
- in radialer Richtung außen von einer den Lamellenkranz (11) umgebenden und radial beabstandeten Wandung (15) begrenzt ist,
wobei
- eine Einpresshülse (20) in den ringförmigen Zwischenraum (13) in axialer Richtung eingeführt und mit einer Mantelfläche mit der den Zwischenraum (13) außen begrenzenden Wandung (15) verpresst ist,
wobei die Einpresshülse (20) einen
- inneren Wandabschnitt (23) aufweist, dessen Innendurchmesser sich in Richtung axial vom Gehäuse (3) weg verjüngt, mit welchem durch die Einführung in den Zwischenraum (13) in axialer Richtung die Lamellen (110) des Lamellenkranzes (11) in radialer Richtung nach innen gebogen sind, und wobei
- eine Elastomertülle (17) auf das Kabel (32) gesteckt ist, welche an der die Öffnung (7) umgebenden Sitzfläche (9) anliegt, vom Lamellenkranz (11) umgeben und durch die radial einwärts gebogenen Lamellen (110) in radialer Richtung komprimiert ist und damit das Kabel (32) fixiert.

2. Teilesatz für eine Kabeldurchführung eines Gehäuses (3) einer elektrischen oder elektro-optischen Vorrichtung, umfassend ein Gehäuseteil oder an einem Gehäuse (3) befestigbares Teil mit einer Öffnung (7), durch welches ein Kabel (32) mit Mantel hindurchführbar ist,
- wobei die Öffnung (7) von einer umlaufenden Sitzfläche (9) umgeben ist, die ihrerseits von einem
- in radialer Richtung weiter auswärts verlaufenden, Lamellenkranz (11) umgeben ist, dessen Lamellen (110) sich in axialer Richtung auswärts erstrecken, wobei
- um den Lamellenkranz (11) herum ein ringförmiger Zwischenraum (13) verläuft, der in radialer Richtung außen von
- einer den Lamellenkranz (11) umgebenden und radial beabstandeten Wandung (15) begrenzt ist,
wobei der Teilesatz außerdem
- eine Einpresshülse (20), welche in den ringförmigen Zwischenraum (13) in axialer Richtung einführbar und mit einer Mantelfläche mit der den Zwischenraum (13) außen begrenzenden Wandung (15) verpressbar ist, wobei die Einpresshülse (20) einen
- inneren Wandabschnitt (23) aufweist, dessen Innendurchmesser sich in axialer Richtung entgegengesetzt zur Einführrichtung verjüngt, sowie
- eine Elastomertülle (17) umfasst, welche auf ein Kabel (32) steckbar und in den Lamellenkranz (11) einführbar ist, so dass sie auf der Sitzfläche (9) anliegt und durch radial einwärts gebogene Lamellen (110) des Lamellenkranzes (11) in radialer Richtung komprimierbar ist, um durch die Kompression ein Kabel (32) zu fixieren.

3. Kabeldurchführung oder Teilesatz gemäß einem der vorstehenden Ansprüche, **dadurch gekennzeichnet, dass** die Elastomertülle (17) in axialer Richtung komprimiert ist und dichtend auf der Sitzfläche (9) aufsitzt.

4. Kabeldurchführung oder Teilesatz gemäß einem der vorstehenden Ansprüche, **dadurch gekennzeichnet, dass** die in den Lamellenkranz (11) eingesetzte und an der Sitzfläche (9) anliegende Elastomertülle (17) in axialer Richtung über den Lamellenkranz (11) hinausragt.

5. Kabeldurchführung oder Teilesatz gemäß einem der vorstehenden Ansprüche, **dadurch gekennzeichnet, dass** der Lamellenkranz (11) aus dem Gehäuse (3) ausgeformt ist.

6. Kabeldurchführung oder Teilesatz gemäß einem der vorstehenden Ansprüche, **dadurch gekennzeichnet, dass** die Elastomertülle (17) eine Shore-A Härte von zumindest 60aufweist.

7. Kabeldurchführung oder Teilesatz gemäß einem der vorstehenden Ansprüche, **dadurch gekennzeichnet, dass** die Elastomertülle (17) mehrere in axialer Richtung beabstandete, in Umfangsrichtung verlaufende Verdickungen (172) aufweist.

8. Kabeldurchführung oder Teilesatz gemäß einem der vorstehenden Ansprüche, **dadurch gekennzeichnet, dass** die Elastomertülle (17) eine Länge aufweist, die größer als deren Innendurchmesser ist.

9. Kabeldurchführung oder Teilesatz gemäß einem der vorstehenden Ansprüche, **dadurch gekennzeichnet, dass** die Elastomertülle (17) eine Länge aufweist, die mindestens zwei Drittel der Länge des Aussendurchmessers der Elastomertülle (17) beträgt.

10. Kabeldurchführung oder Teilesatz gemäß einem der vorstehenden Ansprüche, **dadurch gekennzeichnet, dass** der innere Wandabschnitt der Einpresshülse (20), dessen Innendurchmesser sich in Richtung axial vom Gehäuse (3) weg verjüngt, konisch ist, wobei der Winkel der konischen Innenfläche zur Mittenachse der Einpresshülse (20) zumindest 10° beträgt.

11. Kabeldurchführung oder Teilesatz gemäß einem der vorstehenden Ansprüche, **dadurch gekennzeichnet, dass** die Einpresshülse (20) auf ihrer mit der den ringförmigen Zwischenraum (13) außen begrenzenden Wandung (15) korrespondierenden Mantelfläche zumindest eine umlaufende Rille (28) aufweist.

12. Kabeldurchführung oder Teilesatz gemäß einem der vorstehenden Ansprüche, **dadurch gekennzeichnet, dass** die Mantelfläche der Einpresshülse (20) zusätzlich mit der den ringförmigen Zwischenraum (13) außen begrenzenden Wandung (15) verklebt ist.

13. Kabeldurchführung oder Teilesatz gemäß einem der vorstehenden Ansprüche, **dadurch gekennzeichnet, dass** die Mantelfläche des vom Gehäuse (3) entfernten Endes der Einpresshülse (20) konisch geformt ist.

14. Verfahren zur Herstellung einer Kabeldurchführung, eines Gehäuses (3) einer elektrischen oder elektro-optischen Vorrichtung, wobei im Gehäuse (3) eine
- Öffnung (7) angeordnet ist, durch welches ein Kabel (32) mit Mantel hindurchgeführt wird, wobei die Öffnung (7) von einer umlaufenden Sitzfläche (9) am Gehäuse (3) umgeben ist, die ihrerseits von einem
- in radialer Richtung weiter auswärts verlaufenden, Lamellenkranz (11) umgeben ist, dessen Lamellen (110) sich in axialer Richtung auswärts erstrecken, wobei um den Lamellenkranz (11) herum
- ein ringförmiger Zwischenraum (13) verläuft, der
- in radialer Richtung außen von einer den Lamellenkranz (11) umgebenden und radial beabstandeten Wandung (15) begrenzt ist, wobei
- eine Einpresshülse (20) in den ringförmigen Zwischenraum (13) in axialer Richtung eingeführt und mit einer Mantelfläche mit der den ringförmigen Zwischenraum (13) außen begrenzenden Wandung (15) verpresst wird,
wobei die Einpresshülse (20) einen
- inneren konischen Wandabschnitt (23) aufweist, dessen Innendurchmesser sich in Richtung axial vom Gehäuse (3) weg verjüngt, mit welchem durch die Einführung in den ringförmigen Zwischenraum (13) in axialer Richtung die Lamellen (110) des Lamellenkranzes (11) in radialer Richtung nach innen gebogen werden, und wobei vor dem Einführen der Einpresshülse (20)
- eine Elastomertülle (17) auf das Kabel (32) gesteckt wird, so dass diese vom Lamellenkranz (11) umgeben ist, und durch das Einführen der Einpresshülse (20) an der die Öffnung (7) umgebenden Sitzfläche (9) angelegt und durch die radial einwärts gebogenen Lamellen (110) in radialer Richtung komprimiert wird und damit das Kabel (32) fixiert.

15. Verfahren gemäß dem vorstehenden Anspruch, **dadurch gekennzeichnet, dass** das Einpressen mit vorgegebenem Einpressdruck vorgenommen wird.

16. Montagevorrichtung (40) für elektrische Gehäuse, insbesondere Sensorgehäuse in Form eines kastenförmigen Gehäuses (41), wobei die Montagevorrichtung (40) eine Öffnung (42) auf einer Vorderseite aufweist, in welche das Gehäuse eines Sensors einsetzbar ist, wobei der Rand der Vorderseite des Gehäuses (41) der Montagevorrichtung (40) von einem umlaufenden Blendrahmen (43) umgeben ist, und wobei das Gehäuse (41) innenseitige Rastmittel aufweist, mit welchen das Sensorgehäuse einrastbar ist, und wobei an zumindest zwei gegenüberliegenden Seiten des Gehäuses (41) senkrecht zu den Seiten federnd bewegliche Blattfedern (47) angeordnet sind, wobei die Blattfedern (47) auf ihrer vom Gehäuse (41) abgewandten Seite (48) eine Vielzahl von parallel zur Fläche des Blendrahmens (43) verlaufenden Rastleisten (49) aufweisen, welche in Richtung von der Vorderseite zur Rückseite hin hintereinander angeordnet sind, und wobei der Blendrahmen (43) entfernbare oder wegbiegbare, vorzugsweise ausbrechbare Bereiche (50) aufweist, welche sich an den Seiten des Gehäuses mit den Blattfedern befinden, so dass die entfernbaren oder wegbiegbaren Bereiche (50) so angeordnet sind, dass sie in Richtung auf die Vorderseite des Gehäuses gesehen vor den Blattfedern (47) angeordnet sind und diese verdecken.

17. Montagevorrichtung (40) gemäß dem vorstehenden Anspruch, **dadurch gekennzeichnet, dass** das Gehäuse (41) innenseitige Rastmittel an aus dem Gehäuse ausgeformten Blattfedern (45) aufweist, mit welchen ein Sensorgehäuse einrastbar ist.
